# EUROPÄISCHE PATENTSCHRIFT

(11) **EP 2 603 306 B1**
(45) Veröffentlichungstag und Bekanntmachung des Hinweises auf die Patenterteilung: **25.06.2014**
(21) Anmeldenummer: 11796911.3
(22) Anmeldetag: 11.08.2011
(51) Int. Cl.: B01D 53/56, B01D 53/75

(54) **VERFAHREN ZUR REINIGUNG UND AUFARBEITUNG VON NITROSEN ABGASEN, DIE MINDESTENS NOCH EINE ZUSÄTZLICHE SAURE VERBINDUNG ENTHALTEN**
METHOD FOR CLEANING AND REPROCESSING EXHAUST GASES CONTAINING NITROGEN OXIDES AND CONTAINING AT LEAST ONE ADDITIONAL ACIDIC COMPOUND
PROCÉDÉ D'ÉPURATION ET DE TRAITEMENT DE GAZ D'ÉCHAPPEMENT NITREUX CONTENANT EN PLUS AU MOINS UN COMPOSÉ ACIDE SUPPLÉMENTAIRE

(30) Priorität: 13.08.2010 DE 102010034467
(43) Veröffentlichungstag der Anmeldung: 19.06.2013
(73) Patentinhaber: DGE Dr.-Ing. Günther Engineering GmbH, 06886 Wittenberg (DE)
(72) Erfinder: GÜNTHER, Lothar, 82538 Geretsried (DE)
(74) Vertreter: Tragsdorf, Bodo
(86) Internationale Anmeldenummer: PCT/DE2011/001578
(87) Internationale Veröffentlichungsnummer: WO 2012/019597

(56) Entgegenhaltungen:
- EP-A1- 0 487 834
- US-A- 5 064 625
- US-A- 6 039 783

## Beschreibung

Die Erfindung bezieht sich auf ein Verfahren zur Reinigung und Aufarbeitung von nitrosen Abgasen, die mindestens noch eine zusätzliche saure Verbindung, wie Flusssäure (HF), Schwefeloxide (SOₓ-Verbindungen), Salz- oder Phosphorsäure, einzeln oder in Kombination, enthalten, wobei das Abgas in mindestens drei Waschstufen in Waschkolonnen mittels Wasser als Waschlösung, unter Zusatz eines Oxidationsmittels, behandelt wird. Bei verschiedenen industriellen Prozessen entstehen Dämpfe oder nitrosehaltige Abgase, die NOₓ, HF und SOₓ-Verbindungen enthalten.

Insbesondere beim Recycling von Edelmetallen in Scheideanlagen oder galvanischen Prozessen zur Metallveredlung sowie zum Ätzen von Metallen oder Halbmetallen werden anorganische Säuren wie Salpetersäure, Flusssäure und Schwefelsäure oder deren Gemische eingesetzt. Während der Behandlung finden chemische Reaktionen statt, wobei Dämpfe und Abgase entstehen, die vor allem nitrose Gase (NOₓ) Schwefeloxide (SOₓ) und HF (Flusssäure) enthalten, deren jeweiligen Konzentrationen technologiebedingt schwanken.

Auch bei der Herstellung von Siliziumdünnschicht-Solarzellen werden zur Oberflächenstrukturierung Ätzmischungen unterschiedlicher Zusammensetzungen eingesetzt, die z.B. Flusssäure, Salpetersäure und Schwefelsäure und/oder Phosphorsäure enthalten. Bei der Abscheidung von Silizium auf Substraten entstehen Abgase, die verbrannt werden, wobei die Verbrennungsabgase NOₓ und HF enthalten.

Im Abgas liegen Stickstoffoxide mit zunehmenden Oxidationsgraden, wie z.B. NO, N₂O₃, NO₂ vor, die sich in ihrem Lösungsverhalten und chemischen Reaktivität unterscheiden. Die Reinigung dieser Abgase ist sehr kompliziert und aufwendig, insbesondere die Entfernung der NOₓ-Komponenten, da sich NO in Wasser praktisch nicht löst und dieses erst über eine zeitabhängige Gasphasenreaktion in höhere NOₓ-Komponenten umgewandelt werden muss. Allgemein bekannt sind klassische Reinigungsverfahren mittels alkalischer Wäsche in mehreren Stufen, wobei durch Zusatz von Wasserstoffperoxid oder Natriumhypochlorid NO zu NO₂ umgewandelt wird.

Aus der DE 198 07 520 A1 ist ein Verfahren zur Rückgewinnung von Fluorwasserstoff und nitrosen Gasen aus Abluft durch einen mehrstufigen Waschprozess bekannt. Die beladene Abluft wird in einer ersten Stufe (HF-Wäscher) mit einer wässrigen Flusssäurelösung, danach in einer zweiten Stufe mit Wasser und anschließend in einer dritten Stufe (NOₓ-Wäscher) mit einer Salpetersäurelösung unter Zusatz von Wasserstoffperoxid mit kurzen definierten Verweilzeiten behandelt. In der Reihenfolge der Behandlungsstufen werden HF und eine wässrige HNO₃-Lösung erhalten.

Die Dosierung von H₂O₂ erfolgt in den Waschkreislauf. Damit reagieren auch 2NO + 2H₂O₂ → 2HNO₃ + H₂, überlagert mit NO + H₂O₂ → NO₂ + H₂O und weiter NO₂ + H₂O₂ → HNO₃. Nach der ersten Gleichung bildet sich Wasserstoff, eine unerwünschte Komponente, bei hohen Konzentrationen besteht sogar Explosionsgefahr. Außerdem wird der Verbrauch an H₂O₂ durch die direkte Umsetzung von NO zu NO₂ erhöht.

Diese Verfahrensweise ist aufwendig und mit zusätzlichen Kosten verbunden insbesondere durch einen hohen Verbrauch an Wasserstoffperoxid sowie der ständigen Zuführung von Frischwasser im HF-Wäscher. Außerdem lässt sich die erhaltene Flusssäure nur bis maximal 2% und die Salpetersäure bis maximal 20% aufkonzentrieren, wodurch deren direkte Rückführung in den Beizprozess nicht möglich ist.

In der DE 699 21 389 T2 ist ein Verfahren zur Abscheidung von NOₓ und SOₓ aus bei Metallbeizvorgängen entstehenden Abgasen beschrieben. Das Abgas wird durch einen ersten wässrigen Alkaliwäscher geleitet, um höhere Oxidationsformen von NOₓ und SOₓ und sauren Gasen abzuscheiden. Das abgezogene Abgas wird mit einem ozonhaltigen Gasgemisch behandelt, um niedere Oxidationsformen von NOₓ und SOₓ zu höheren Oxidationsformen zu oxidieren, die in einem nachfolgenden zweiten wässrigen Alkaliwäscher entfernt werden. In beiden Alkaliwäschern wird ein pH von 10 bis 14 eingestellt. Außerdem wird ein ozonhaltiges Gasgemisch zusätzlich durch das Beizbad geperlt, um die Beizeffizienz zu erhöhen und vorhandenes NOₓ und SOₓ zu höheren Oxidationsformen zu oxidieren.

Diese Verfahrensweise ist aufwendig und kostenintensiv. Es entstehen Säure- und Salzprodukte, die nur teilweise in der Beizanlage wieder eingesetzt und entsorgt werden müssen. Außerdem sind mehrere Ozonbehandlungen erforderlich.

Bekannt ist auch der Einsatz von Ätzmischungen, z.B. Flusssäure, Salpetersäure sowie Schwefelsäure und/oder Phosphorsäure, zur Herstellung von strukturierten Oberflächen auf kristallinen Siliziumoberflächen oder Siliziumsubstraten, insbesondere für Anwendungen im Photovoltaikbereich. Während der Herstellung entstehen nitrose Abgase.

Hierzu sind auch spezielle Verfahren zur Reinigung dieser Abgase bekannt (EP 1 923 124 A1 und EP 1 920 819 A1).

Der Erfindung liegt die Aufgabe zugrunde, ein Verfahren zur Reinigung und Aufarbeitung von nitrosen Abgasen, die mindestens noch eine zusätzliche saure Komponente bzw. saure chemische Verbindung enthalten, zu schaffen, mit dem ein Abgas hoher Reinheit und eine Mischsäure, die unmittelbar wieder zum Beizen oder Ätzen einsetzbar ist, erhalten werden. Ferner soll sich das Verfahren durch einen geringeren Aufwand auszeichnen. Erfindungsgemäß wird die Aufgabe durch die im Anspruch 1 angegebenen Merkmale gelöst. Vorteilhafte Weiterbildungen der Verfahrensweise sind Gegenstand der Ansprüche 2 bis 15.

Das Verfahren ist zur Reinigung und Aufarbeitung von nitrosen Abgasen, insbesondere aus Beiz- oder Ätzprozessen bestimmt, die mindestens noch eine zusätzliche saure Komponente enthalten. Außer NOₓ kann das Abgas noch eine oder mehrere dieser Verbindungen wie Flusssäure (HF), Schwefeldioxid (SO₂), Salzsäure (HCl) oder Phosphorsäure (H₃PO₄) enthalten, gegebenenfalls auch noch organische Säuren. Während des Beizprozesses abgetragene Metallteilchen, wie Eisen, Chrom, Kupfer, Zink usw., die sich im Beizbad anreichern, werden vor der eigentlichen Reinigung des Abgases separat abgeschieden.

Das zu reinigende Abgas wird stufenweise, in mindestens drei Waschstufen mit in Reihe geschalteten Waschkolonnen mit einer Füllkörperschüttung mit einer Oberfläche von 180 bis 980 m²/m³, einer Raumbelastung von 30 bis 180 m³/m³h je Waschkolonne im Gegenstrom mit Wasser als Waschlösung mit einer Temperatur von 5 bis 30°C in Kontakt gebracht. Füllkörperschüttung und Raumbelastung innerhalb vorgenannter Bereiche für die einzelnen Waschkolonnen sind für eine effektive Abgasreinigung von erheblicher Bedeutung.

So kommt es zu deutlich geringeren Verweilzeiten der Waschlösung in der Füllkörperschicht der Waschkolonnen.

In Versuchen zeigte sich, dass bei den hohen Raumbelastungen die Waschkolonnen als Gas-Flüssigkeits-Reaktoren und Gas-Gas-Reaktoren kombiniert arbeiten, in denen die Vorwärts- bzw. Rückwärtsreaktionen der NOₓ-Bindung (Gas-Flüssigkeits-Reaktion) deutlich mit mindestens 50% in die Richtung der Vorwärtsreaktion nur wirksam mit Füllkörpern mit einer hohen Oberfläche und einem geringen Lückengrad von 0,78 bis 0,9 erreicht werden können. Mit dem geringen Lückengrad werden überraschend zusätzlich eine verbesserte Gleichverteilung für die Gasführung und ein höherer Stoffaustausch in den Waschkolonnen erreicht. Weiter erfolgt so durch die Gas-Gas-Reaktionen der NOₓ-Komponenten eine Gleichgewichtseinstellung zu NO₂ oder deren höhere Oxidationsprodukte, die in Wasser löslich sind. Damit wird eine unerwünschte Wasserstofffreisetzung bei der Reaktion mit Wasserstoffperoxid erheblich reduziert bzw. verhindert.

Die Raumbelastung der einzelnen Waschkolonnen untereinander wird so eingestellt, dass das Verhältnis der Raumbelastung der ersten Waschkolonne zu denen der nachfolgenden Waschkolonnen als Summe 1:1,5 bis 1:10, vorzugsweise 1:2 bis 1:5, beträgt. Im Fall von drei Waschkolonnen werden die Raumbelastungswerte der zweiten und dritten Kolonne addiert. Um im Abgas enthaltene saure Komponenten und im Kolonnensumpf HNO₂ zu HNO₃ aufzuoxidieren, wird in an sich bekannter Weise ein Oxidationsmittel, vorzugsweise Wasserstoffperoxid (H₂O₂), zugesetzt. Die zugesetzte Menge an Oxidationsmittel sollte das 0,01 bis 0,5-fache, vorzugsweise 0,05 bis 0,2-fache, des stöchiometrischen Bedarfs zur NO-Oxidation entsprechen, wobei es zweckmäßig ist, die Dosierung auf die einzelnen Kolonnen in einem Verhältnis der Kolonnen K1:K2:K3 wie 1:2:2 bis 1:4:3 vorzunehmen. Durch die hohe Raumbelastung erfolgt bereits in der Gasphase mit Luftsauerstoff eine Umsetzung von NO zu NO₂. Die Zudosierung von H₂O₂ ist nur zur Reaktion von SOₓ und die Umsetzung von HNO₂ zu HNO₃ in der flüssigen Phase erforderlich. H₂O₂ wird in den oberen Bereich des Kolonnensumpfes eingeleitet, wo H₂O₂ im Kolonnensumpf mit HNO₂ ausreichend Zeit (ca. 1 bis 5 Minuten) hat, zu reagieren. Dadurch entstehen keine unerwünschten Nebenprodukte, wie Wasserstoff, und die Einsatzmenge an H₂O₂ kann deutlich reduziert werden. Im Vergleich dazu wird bei einer Verfahrensweise gemäß der DE 198 07 520 A1 in etwa die 2 bis 5 fache Menge an H₂O₂ verbraucht.

Grundsätzlich kann jeder Waschkolonne Wasserstoffperoxid zur Reaktionsbeschleunigung zudosiert werden. Bevorzugt wird der dritten Waschkolonne Wasserstoffperoxid zur Einstellung der gewünschten Reingaswerte für NOₓ zudosiert, welches dann über die Nachspeisung in die zweite und erste Waschkolonne gelangt. Der zweiten und/oder dritten Waschkolonne kann Oxidationsmittel im Mengenverhältnis von mindestens 2:1, bezogen auf die in der ersten Waschkolonne eingeleitete Menge an Oxidationsmittel, zugeführt werden.

Infolge der hohen Raumbelastung in Verbindung mit der vorgesehenen Füllkörperschüttung werden in der ersten Waschstufe bereits mindestens 60% der im Abgas enthaltenen NOₓ-Bestandteile und 90% der im Abgas enthaltenen weiteren sauren Bestandteile ausgewaschen. Die sich während der Reinigung in den Kolonnensümpfen einstellenden Säurekonzentrationen der beladenen Waschlösungen werden ermittelt und überwacht. Der Waschkreislauf wird so lange gefahren, bis sich in den Kolonnensümpfen der Waschkolonnen ein Konzentrationsverhältnis der Misch- oder Dünnsäure in der Reihenfolge der einzelnen Waschkolonnen, von der ersten bis zur dritten Waschkolonne, K1 :K2:K3, von 500:50:5 bis 500:10:0,2 einstellt. Vorzugsweise sollte das Konzentrationsverhältnis von der ersten zur zweiten Waschkolonne, K1 :K2, 50:1 bis 10:1 und das von der zweiten Waschkolonne zur dritten Waschkolonne, K2:K3 ebenfalls 50:1 bis 10:1 betragen.

Ist dieses erreicht, so werden eine Teilmenge an Mischsäure aus der ersten Kolonne ausgekreist und anschließend nacheinander jeweils Dünnsäure aus der zweiten Kolonne in die erste Kolonne und aus der dritten Kolonne in die zweite Kolonne nachdosiert und der dritten Kolonne als Ausgleich Wasser zugeführt.

Mit der vorgeschlagenen Verfahrensweise wird eine Mischsäure erhalten, die in ihrer Qualität für einen direkten Wiedereinsatz als Beiz- oder Ätzmischung geeignet ist. Eine entsprechende Reinigungsanlage kann unmittelbar neben einem Beizbetrieb errichtet werden. Die ausgekreiste Mischsäure kann dann direkt wieder dem Beizbetrieb zugeführt werden.

Zur Ermittlung der Konzentration der Misch- oder Dünnsäure am Sumpf der einzelnen Waschkolonnen werden Proben an beladener Waschlösung gezogen und entweder deren Dichte oder Leitfähigkeit als Äquivalenzwert bestimmt, und in Abhängigkeit von den ermittelten Ist-Werten und deren Vergleich mit vorgegebenen Sollwerten der Zeitpunkt der Auskreisung von Mischsäure, Dünnsäure sowie der Nachdosierung von Wasser ermittelt. Die bei Wäsche der nitrosen Gase entstehende Salpetersäure ist die Leitkomponente für die Bestimmung der Konzentration der Mischsäure: Die Anteile der anderen Säuren HF, HCl, H₂SO₄ oder H₃PO₄ sind immer deutlich geringer, in etwa im Faktor 3:1 bis 20:1 (HNO₃:Summe anderer Säuren). Damit ist das kontinuierliche Messsignal der Leitfähigkeit für eine Grobüberwachung ausreichend. Bei Reinigung eines Abgases, das mehrere saure Komponenten enthält, wird zuerst die Gesamtsäurekonzentration im Sumpf der ersten Waschkolonne ermittelt und dann die Einzelkonzentrationen der anderen sauren Komponenten. Wenn die einzelnen sauren Komponenten in der gewünschten Konzentration vorliegen, so wird Mischsäure ausgekreist. Gegebenenfalls kann bei Abweichungen in einer oder zwei Komponenten noch nachdosiert werden, um die erforderliche Gesamtzusammensetzung zu erhalten. Die ausgekreiste Menge an Mischsäure kann entweder vollständig oder auch nur teilweise, z.B. 30 bis 80%, durch Dünnsäure aus der nachfolgenden Waschkolonne und/oder Wasser ersetzt werden.

Vorzugsweise wird frühestens Mischsäure aus der der ersten Waschkolonne ausgekreist, wenn sich im Kolonnensumpf der ersten Waschkolonne eine Konzentration an Mischsäure, bestehend aus Salpetersäure und der zusätzlichen sauren Komponente, von mindestens 20% eingestellt hat, und spätestens bei Erreichen einer Mischsäurekonzentration von über 40%. Unabhängig von der ersten Waschstufe bzw. Waschkolonne kann erforderlichenfalls aus der zweiten und/oder dritten Waschkolonne Dünnsäure ausgekreist werden. Das kann der Fall sein, wenn der Füllstand im Kolonnensumpf den oberen Grenzwert erreicht hat oder die Dünnsäure eine ausreichende Konzentration für eine weitere Verwendung besitzt.

Übersteigt die Säurekonzentration der Waschlösung einen vorgegebenen Grenzwert so kann die ausgekreiste Teilmenge entweder entsorgt oder destillativ aufgearbeitet werden.

Der Füllstand in den Sümpfen der Waschkolonnen sollte kontinuierlich überwacht werden. Bei einem Absinken der Füllstände unterhalb eines Grenzwertes von 30% des maximalen Füllvolumens müssen Dünnsäure und/oder Wasser nachdosiert werden.

Bevorzugt besteht die Füllkörperschüttung aus Füllkörpern mit einem Lückengrad von mindestens 0,78, vorzugsweise 0,83 bis 0,88.

Bei einer Reinigung von Abgasen, die u.a. auch Flusssäure enthalten, wird Mischsäure erst dann ausgekreist, wenn sich in dieser ein Konzentrationsverhältnis von Salpetersäure zu Flusssäure von 5 bis 50:1 eingestellt hat. In diesem Fall muss auch der in der Waschlösung vorhandene Anteil an Flusssäure zumindest zu bestimmten Zeitpunkten analytisch bestimmt werden. In bestimmten Anwendungsfällen kann es erforderlich sein, dass die aus der ersten Waschkolonne ausgekreiste Mischsäure zwischengelagert oder für eine weitere Verwendung destillativ aufkonzentriert wird.

Die während einer destillativen Aufbereitung anfallende Brüden können in einem Wärmetauscher kondensiert und anfallendes Kondensat als Wasserzusatz verwendet werden, das beispielweise der dritten Waschkolonne zugeführt wird. Nicht kondensierbare Anteile werden wieder in den zu reinigenden Abgasstrom zurückgeführt.

Grundsätzlich ist darauf zu achten, dass der zu reinigende Abgasstrom in seiner Menge so bemessen wird, dass im Abgassystem der Beiz- oder Ätzanlage kein Überdruck entsteht.

Die Erfindung soll nachstehend an einigen Beispielen erläutert werden. In der zugehörigen Zeichnung ist das Funktionsschema einer Anlage zur Durchführung des Verfahrens dargestellt. Die Anlage besteht aus drei in Reihe geschalteten Waschkolonnen K1, K2 und K3, die die einzelnen Waschstufen bilden. Die Waschkolonnen sind mit einer Füllkörperschüttung FS ausgerüstet, die von dem zu reinigenden Abgas im Gegenstrom zu der am Kopf K der Kolonne aufgegebenen Waschflüssigkeit bzw. Waschlösung durchströmt wird. Unterhalb des Kolonnenbodens befindet sich der Kolonnensumpf KS, in dem sich die verunreinigte Waschlösung ansammelt. Der zu reinigende Abgasstrom wird über die Leitung 1 in die Waschkolonne K1 gepumpt und unterhalb der Füllkörperschüttung FS zugeführt.

Die Füllkörperschüttungen bestehen vorzugsweise aus Kunststoff (PP oder PE), besitzen eine Oberfläche von 180 bis 980 m²/m³. Die Raumbelastung beträgt 30 bis 180 m³/m³h je Waschkolonne, wobei der Lückengrad der eingesetzten Füllkörper unter 0,9 liegen sollte, vorzugsweise zwischen 0,83 bis 0,88. Konventionelle Füllkörper haben einen Lückengrad von 0,92 bis 0,98. Die Parameter Füllkörperschüttung und Raumbelastung sind abhängig von der Zusammensetzung des Abgasstromes. Die Verweilzeiten des Abgases in den einzelnen Kolonnen K1, K2, K3 sollen mindestens 20 s und maximal 520 s betragen.

Die drei Waschkolonnen K1, K2, K3 können mit identischen oder auch unterschiedlichen Füllkörperschüttungen FS ausgerüstet sein. Dies ist abhängig von der Zusammensetzung des zu reinigenden Abgasstromes. Jede Waschkolonne K1, K2, K3 ist mit einer Kreislaufleitung KL1, KL2, KL3 als Waschkreislauf verbunden, die vom Sumpf KS zum Kopf K der Kolonne geführt ist. In die jeweilige Kreislaufleitung sind eine Pumpe P1, P2, P3 und Wärmetauscher W1, W2, W3 mit Wasserkühlung eingebunden, um die Waschlösung auf eine vorgegebene Temperatur im Bereich von 5 bis 30°C zu kühlen. Die Waschkreisläufe KL1, KL2, KL3 werden mit Wasser, vorzugsweise entionisiertes Wasser und/oder destilliertes Wasser, betrieben, wobei die einzelnen Kreislaufmengen konstant sind. Welche Wasserqualität zum Einsatz kommt, ist abhängig von der Zusammensetzung des Abgasstromes und dem Einsatzgebiet der verwendeten Beize. So ist es bei einem Beizprozess in der Metallindustrie zum Beizen von Apparaten oder Drähten nicht immer erforderlich hochreines Wasser zu verwenden.

Die Waschkolonnen K1, K2 sind über Leitungen 2 bzw. 3, die vom Kopf K zum Sumpf der nachfolgenden Kolonne K2, K3 geführt sind, miteinander verbunden. Das gereinigte Abgas wird am Kopf K der Kolonne K3 über die Leitung 4 abgezogen. Die Zu- und Abführung des Kühlwassers für die Wärmetauscher W1, W2, W3 erfolgt über die Leitungen 5 bzw. 6. Über eine absperrbare Leitung 7 kann Wasser zum Kopf K der Kolonne K3 geführt werden.

Das zur Aufoxidierung erforderliche Oxidationsmittel, vorzugsweise H₂O₂, wird in einem Behälter B2 gelagert, der über ein absperrbares Leitungssystem 10 mit den Sümpfen der drei Waschkolonnen K1, K2, K3 verbunden ist und im oberen Abschnitt des Kolonnensumpfes in diesen eingeleitet wird. In das Leitungssystem 10 ist eine Pumpe P4 eingebunden. Jeder Kolonne kann somit dosiert Oxidationsmittel zugeführt werden.

In die Kreislaufleitung KL1 ist eine absperrbare Leitung 11 eingebunden, die zu einem Lagerbehälter B1 für Mischsäure geführt ist. Zu bestimmten Zeitpunkten, die im Zusammenhang mit den Beispielen noch näher erläutert werden, kann über die Leitung 11 Mischsäure ausgekreist werden.

Der Lagerbehälter B1 steht über eine Leitung 12, in die eine Pumpe P5 eingebunden ist, mit der nicht näher gezeigten Versorgungseinheit für die Bereitstellung der Beiz- oder Ätzmischung in Verbindung. Zusätzlich kann noch eine Destillationseinheit D1 zwischengeschaltet werden. Die Anlage ist mit einer prozessorgesteuerten Regelung ausgerüstet. In diese sind spezielle Einheiten zur Messung der Dichte oder Leitfähigkeit der in der ersten Waschkolonne K1 anfallenden Mischsäure und in der zweiten Kolonne K2 anfallenden Dünnsäure vorgesehen. Außerdem wird analytisch der in der Mischsäure enthaltene Säureanteil der zusätzlichen sauren Komponente ermittelt. Die Ergebnisse werden über einen Rechner ausgewertet und bei Überschreitung eines vorgegebenen Sollwertes wird Mischsäure ausgekreist.

Zusätzlich werden die Füllstände in den Sümpfen der einzelnen Waschkolonnen K1, K2, K3 überwacht. Weitere Einzelheiten werden nachfolgend im Zusammenhang mit den Beispielen erwähnt.

### Beispiel 1

Zum Beizen von Wafern für Solarzellen wird eine Beizlösung mit einer Zusammensetzung von:

| | |
|---|---|
| HNO₃ | 30 Gew.-% |
| HF | 12 Gew.-% |
| H₂SO₄ | 5 Gew.-% |
| H₂O | 53 Gew.% |

eingesetzt und im Beizbad im Kreislauf gefahren. Während des Beizvörganges werden aus der Beizlösung Gase, wie NOₓ, HF und SO₂ freigesetzt, die über eine Absaugung aus der geschlossenen Beizkabine abgesaugt werden. Die Beizlösung wird in Abständen nachgeschärft, durch Zusatz von HF und HNO₃ in konzentrierter Form.

Während des Beizprozesses werden 1.800 m³/h Abgas mit einer Temperatur von 22°C abgesaugt. Die Zusammensetzung des Abgasstromes ist folgende:
- 12.500 mg/m³ NOx mit einem Verhältnis von NO/NO₂ von 1:10,
- 1.100 mg/m³ HF und
- 25 mg/m³ SO₂.

Der Abgasstrom (1.800 m³/h) wird über die Leitung 1 der ersten Waschstufe bzw. Waschkolonne K1 zugeführt. Gleichzeitig wird über die Kreislaufleitung KL1 entionisiertes Wasser in einer Menge von 50 m³/h im Kreislauf gefahren. Das Wasser wird im Wärmetauscher W1 auf eine Temperatur von 12°C gekühlt. Die eingesetzte Füllkörperschüttung besitzt eine Oberfläche von insgesamt 580 m²/m³ und einen Lückengrad von 0,86. Die Waschkolonne K1 hat eine Raumbelastung von 74 m³/m³h. Unter Berücksichtigung der eingestellten Strömungsgeschwindigkeit für den Abgasstrom liegt die Verweilzeit des zu reinigenden Abgases in der Waschkolonne bei ca. 48 s.

Das Abgas wird im Gegenstrom zur Waschlösung durch die Füllkörperschüttung geleitet und dabei diffundieren die nitrosen Abgase und sauren Komponenten im Wasser (Waschlösung), wobei die nitrosen Abgase mit Wasser zu HNO₂ und zu HNO₃ reagieren. Da die salpetersaure Lösung, der Anteil an salpetriger Säure HNO₂, nicht beständig ist und bedingt dadurch NO freigesetzt würde, wird in an sich bekannter Weise H₂O₂ als Oxidationsmittel zudosiert. Bezogen auf die Abgasstromzusammensetzung und die Kreislaufmenge an Waschlösung werden über das Leitungssystem 10 kontinuierlich 2 l/h H₂O₂ (50%ig) in den Sumpf der Waschkolonne geleitet. Dadurch finden gleichzeitig im Kolonnensumpf auch die direkte Umsetzung von SO₂ mit H₂O₂ zu H₂SO₄ an der Phasengrenzfläche und die Aufoxidation von gebildeter HNO₂ zu HNO₃ statt. Der vorgereinigte Abgasstrom, enthält ca. noch
- 3.120 mg/m³ NOₓ mit einem Verhältnis von NO/NO₂ von 1:10,
- 22 mg/m³ HF und
- 2 mg/m³ SO₂
und wird über die Leitung 2 abgezogen, zum Sumpf der Waschkolonne K2 geleitet und im Gegenstrom mit Waschlösung weiter gereinigt. Die Auslegung der Waschkolonne K2 ist analog wie die der ersten Kolonne K1, sodass die Verweilzeit des vorgereinigten Abgases in der Kolonne K2 ebenfalls ca. 48 s beträgt. Die Kreislaufwassermenge (50 m³/h) wird im Wärmetauscher W2 auf eine Temperatur von 12°C gekühlt.

Unter diesen Bedingungen entsteht im Sumpf der Kolonne K2 bzw. im Waschkreislauf KL2 eine Dünnsäure mit einer Säurekonzentration von etwa 10 Gew.-% (=Leitfähigkeit von 285 mS/cm) mit folgender Zusammensetzung:

| | |
|---|---|
| HNO₃ | 100,20 g/l |
| HNO₂ | nicht nachweisbar |
| HF | 0,65 g/l |
| H₂SO₄ | 0,01 g/l |

Der vorgereinigte Abgasstrom enthält ca. noch
- 970 mg/m³ NOₓ mit einem Verhältnis von NO/NO₂ von 1:10,
- 2 mg/m³ HF und
- 0,5 mg/m³ SO₂
und wird über die Leitung 3 abgezogen, zum Sumpf der Waschkolonne K3 geleitet und im Gegenstrom mit im Kreislauf gefahrener Waschlösung weiter gereinigt.

Die Auslegung der Waschkolonne K3 ist analog wie die der beiden anderen Kolonnen K1 und K2, sodass die Verweilzeit des vorgereinigten Abgases in der Kolonne K3 ebenfalls ca. 48 s beträgt. Die Kreislaufwassermenge (50 m³/h) wird im Wärmetauscher W3 auf eine Temperatur von 12°C gekühlt.

Unter diesen Bedingungen entsteht im Sumpf der Kolonne K3 bzw. im Waschkreislauf KL3 eine Dünnsäure mit einer Säurekonzentration von etwa 0,2 Gew.-% (=Leitfähigkeit von 10,5 mS/cm) mit folgender Zusammensetzung:

| | |
|---|---|
| HNO₃ | 1,78 g/l |
| HNO₂ | nicht nachweisbar |
| HF | 0,01 g/l |
| H₂SO₄ | nicht nachweisbar |

Das am Kopf K der Kolonne K3 über die Leitung 4 abgezogene gereinigte Gas hat folgende Zusammensetzung:
180 mg/m³ an NOₓ, 1 mg/m³ HF und unter 0,1 mg/m³ an SO₂.

Dieses gereinigte Gas kann bedenkenlos an die Umgebung abgegeben werden. Alternativ kann durch Nachschaltung einer weiteren Waschkolonne der NOₓ-Gehalt im Abgas auf unter 100 mg/m³ reduziert werden.

Wie bereits erwähnt, wird während des Betriebs der drei Waschstufen K1, K2, K3 in der ersten Waschstufe K1 die Dichte oder Leitfähigkeit der gebildeten Mischsäure gemessen und überwacht. Bei Erreichen eines vorgegebenen Grenzwertes wird über die Leitung 11 eine Teilmenge an Mischsäure ausgekreist und in den Behälter B1 abgeführt.

In diesem Beispiel wird für die Dichte ein Grenzwert von 1.245 g/l oder für die Leitfähigkeit ein Grenzwert von 1.110 mS/cm festgelegt. Diese Grenzwerte entsprechen einem Säureanteil in der Mischsäure von etwa 40 Gew.-%. Bei diesem Grenzwert liegt im Sumpf der Waschkolonne K1 bzw. im Waschkreislauf KL1 eine Salpetersäure mit einem Anteil von unter 100 ppm an HNO₂ vor.

Diese Waschlösung bzw. Mischsäure hat folgende Zusammensetzung:

| | |
|---|---|
| HNO₃ | 280,40 g/l |
| HNO₂ | 0,07 g/l |
| HF | 120,20 g/l |
| H₂SO₄ | 1,20 g/l. |

Die Parameter Dichte oder Leitfähigkeit der Waschlösung/Mischsäure dienen zugleich als Messgröße für die Mischsäurekonzentration. Die jeweiligen Grenzwerte werden in Abhängigkeit von der Zusammensetzung des Abgasstromes und der weiteren vorgesehenen Verwendung der Mischsäure individuell festgelegt, wobei der untere Mindestgrenzwert bei einem Säureanteil von 20 Gew.-% liegt.

Gemäß dem vorliegenden Beispiel wird bei Erreichen des vorgegebenen Grenzwertes für die Leitfähigkeit von 1.110 mS/cm (=Säureanteil in der Mischsäure von etwa 40 Gew.-%) zusätzlich der in der Waschlösung vorhandene Anteil an Flusssäure analytisch bestimmt. Ergibt die analytische Bestimmung einen Anteil an Flusssäure von mindestens 12 Gew.-%, dann wird die Mischsäure aus dem Kolonnensumpf der Waschkolonne K1 ausgekreist. Die Auskreisung erfolgt deshalb bei 12 Gew.-%. da die eingesetzte Beizmischung 12 Gew.-% HF enthält und die ausgekreiste Mischsäure direkt wieder zum Beizen verwendet werden soll. Zusätzlich wird der Füllstand an Mischsäure im Sumpf der Kolonne K1 gemessen, der 2,2 m³ beträgt. Im vorliegenden Fall werden 1,5 m³ ausgekreist und dem Behälter B1 zugeführt oder direkt dem Beizbad als Ergänzung oder für einen neuen Beizansatz.

Unmittelbar nach erfolgter Auskreisung wird über die Leitung 9 Dünnsäure aus der Waschkolonne K2 in die Waschkolonne K1 nachdosiert. Dabei sinkt in der Waschkolonne K1 die Leitfähigkeit auf etwa 400 mS/cm. Verringert sich der Füllstand in der Waschkolonne K2 infolge der Auskreisung von Waschlösung/Dünnsäure zur Waschkolonne 1, so wird über die Leitung 8 aus der Waschkolonne 3 Waschlösung in die Waschkolonne 2 nachdosiert.

Die Absenkung des Füllstandes in der Waschkolonne K3 infolge der Rückführung von Waschlösung zur Waschkolonne 2 wird durch Zuführung von Wasser in vorgenannter Qualität über die Leitung 7 ausgeglichen.

Gemäß diesem Beispiel erfolgt die Auskreisung der beladenen Waschlösung (Mischsäure) in der ersten Kolonne K1, wenn eine Säurekonzentration von 40 Gew.-% erreicht ist. In den nachfolgenden Kolonnen K2 und K3 beträgt diese jeweils 5 Gew.-%. Das Konzentrationsverhältnis von Misch- oder Dünnsäure in der Reihenfolge K1 bis K3 (K1:K2:K3) beträgt somit 40 :5 : 0,5 bis 10: 1:0,01.

Die Reinigung des Abgasstromes erfolgte unter Einhaltung eines Verhältnisses der Raumbelastung der ersten Waschkolonne (K1) zu denen der nachfolgenden Waschkolonnen (K2, K3) als Summe von 1:2 bis 1:5.

### Beispiel 2

Aus dem Kolonnensumpf der Waschkolonne K2 werden 100 l/h an Dünnsäure ausgekreist und einer ersten Destillationseinheit zugeführt. Bei einer Destillation unter Normaldruck und 100°C wird im Sumpf der Destillationseinheit eine Mischsäure (59,5 Gew.-% HNO₃, 2,6 Gew.-% HF und 0,06 Gew.-% H₂SO₄) erhalten. Diese Mischsäure kann wieder als Beizmischung verwendet werden. Falls der Gehalt an HF noch zu gering sein sollte, kann dieser durch Zusatz von Flusssäure (HF) aufkonzentriert werden.

Die bei der Destillation anfallenden Brüden werden in einem Wärmetauscher kondensiert. Nicht kondensierbare Anteile an NO oder HF werden abgezogen und dem zu reinigenden Abgasstrom (Leitung 1) zugeführt. Das anfallende Kondensat (69,3 l/h) enthält noch 0,5 Gew.-% HF und 1,6 Gew.-% HNO₃. Dieses Kondensat kann der Waschkolonne K3 direkt zum Ausgleich von Wasserverlusten zugeführt werden. Alternativ kann das Kondensat bzw. Destillat einer zweiten Destillationseinheit zugeführt werden, in der es unter Vakuum (z.B. 300 mbar) durch Aufkonzentration im Verhältnis von 1:10 so weit aufgearbeitet wird, dass Dünnsäure (6,9 l/h) mit einer Konzentration von 11 Gew.-% HNO₃ und 2,9 Gew.-% HF entsteht. Die erhaltene Dünnsäure wird zur weiteren Behandlung der ersten Destillationsstufe D1 zugeführt. Das abgetrennte Kondensat (60 l/h) kann der Waschkolonne K3 zugeführt werden. Anfallende, nicht kondensierbare Bestandteile aus der zweiten Destillationsstufe werden analog, wie die aus der ersten Destillationsstufe, dem zu reinigenden Abgasstrom zugeführt. Mit dieser Verfahrensweise kann ein geschlossener Wertstoffkreislauf für die aus dem Abgas abzutrennenden sauren Komponenten ohne zusätzliche Entsorgung geschaffen werden.

### Beispiel 3

In einem Beizprozess wird eine Beizlösung mit einer Zusammensetzung von:

| | |
|---|---|
| HNO₃ | 20 Gew.-% |
| HF | 5 Gew.-% |
| H₂O | 75 Gew.-% |

eingesetzt.

Diese Beizlösung wird im Beizbad im Kreislauf gefahren. Dabei werden aus der Beizlösung Gase, wie NOₓ und HF freigesetzt, die über eine Absaugung aus der geschlossenen Beizkabine abgesaugt werden. Die Beizlösung wird in Abständen nachgeschärft. Dazu wird HF und HNO₃ in konzentrierter Form nachdosiert.

Aus dem kontinuierlichen Beizprozess werden 1.000 m³/h Abgas mit einer Temperatur von 20°C und einer Zusammensetzung von 9.500 mg/m³ an NOₓ mit einem Verhältnis von NO/NO₂ von 1:10 und 450 mg/m³ HF abgesaugt.

Die Reinigung des Abgasstromes erfolgt analog wie in Beispiel 1 in einer Anlage mit drei Waschstufen bzw. Waschkolonnen K1, K2 und K3 unter folgenden Bedingungen:
- Waschkreislaufmenge der ersten Waschkolonne: 28 m³/h,
- Temperatur der Waschlösung: 10°C,
- Verweilzeit des zu reinigenden Abgases in der WaschkolonneK1: 35 s,
- Füllkörperoberfläche (insgesamt 650 m²/m³).

Der Waschkreislauf KL1 wird so lange gefahren bis sich eine gemessene Dichte 1145 g/l oder Leitfähigkeit 810 mS/cm einstellt, die einer Gesamtsäurekonzentration von 21 bis 25 Gew.-% entsprechen. Die beladene Waschlösung (Gesamtsäurekonzentration 25 Gew.-%) hat folgende Zusammensetzung:

| | |
|---|---|
| HNO₃ | 198,50 g/l |
| HNO₂ | 0,03 g/l |
| HF | 48,20 g/l |
| H₂SO₄ | 1,20 g/l. |

Durch gezielte Dosierung von 1 l H₂O₂ in den oberen Abschnitt des Kolonnensumpfes erfolgt im Kolonnensumpf der Waschkolonne K1 die Aufoxidation von gebildeter HNO₂ zu HNO₃, wodurch eine Salpetersäure mit einem Anteil von unter 50 ppm an HNO₂ entsteht.

Ergibt die Leitfähigkeitsmessung einen Wert von 810 mS/cm, so wird der in der beladenen Waschlösung (Mischsäure) vorhandene Anteil an Flusssäure analytisch bestimmt.

Der Inhalt an beladener Waschlösung im Kolonnensumpf der Waschkolonne K1 wird über den Füllstand gemessen und beträgt 1,2 m³. Ergibt die analytische Bestimmung einen Anteil an Flusssäure von über 5 Gew.-%, so wird Mischsäure aus dem Kolonnensumpf ausgekreist. Im vorliegenden Fall sind dies 0,8 m³, die im Beizbad als Ergänzung oder für einen neuen Beizansatz verwendet werden.

Nach dem Auskreisen von Mischsäure (Menge 0,8 m³) wird die gleiche Menge an Dünnsäure aus der Waschkolonne K2 nachdosiert. Dabei sinkt die Leitfähigkeit auf etwa 410 mS/cm. Das in der Waschkolonne K1 gereinigte Abgas wird über Leitung 2 der Waschkolonne K2 zugeführt und in dieser unter folgenden Bedingungen weiter gereinigt.
- Waschkreislaufmenge der ersten Waschkolonne: 28 m³/h,
- Temperatur der Waschlösung: 12°C,
- Verweilzeit des zu reinigenden Abgases in der Waschkolonne K1: 40 s,
- Füllkörperoberfläche (insgesamt 650 m²/m³).

Zum Zeitpunkt der Auskreisung von Mischsäure aus der Waschkolonne K1 erreicht die Leitfähigkeit der beladenen Waschlösung (Dünnsäure) in der Waschkolonne K2 einen Wert von 285 mS/cm. Dieser entspricht einer Säurekonzentration von etwa 5 Gew.-%. Die Dünnsäure in der Waschkolonne K2 hat folgende Zusammensetzung:

| | |
|---|---|
| HNO₃ | 50,2 g/l |
| HNO₂ | nicht nachweisbar |
| HF | 0,35 g/l. |

Verringert sich der Füllstand in der Waschkolonne K2 infolge der Auskreisung von Waschlösung zur Waschkolonne K1, so wird über die Leitung 8 aus der Waschkolonne 3 Waschlösung in die Waschkolonne 2 nachdosiert.

Das aus der Waschkolonne K2 austretende Abgas wird über Leitung 3 der dritten Waschkolonne K3 zugeführt und in dieser unter den gleichen Bedingungen wie in der Waschkolonne K2 weiter gereinigt.

Zum Zeitpunkt der Auskreisung von Mischsäure aus der Waschkolonne K1 erreicht die Leitfähigkeit der beladenen Waschlösung (Dünnsäure) in der Waschkolonne K3 einen Wert von 9,5 mS/cm. Dieser entspricht einer Säurekonzentration von etwa 0,1 Gew.-%. Die Dünnsäure in der Waschkolonne K3 hat folgende Zusammensetzung:

| | |
|---|---|
| HNO₃ | 0,92 g/l |
| HNO₂ | nicht nachweisbar |
| HF | 0,01 g/l. |

Verringert sich der Füllstand in der Waschkolonne K3 infolge der Auskreisung von Waschlösung zur Waschkolonne K2, so wird über die Leitung 11 Wasser nachdosiert.

Die am Kopf K der Waschkolonnen K1, K2 und K3 abgezogenen Abgasströme haben folgende Zusammensetzungen:

| | K1 | K2 | K3 | K4 |
|---|---|---|---|---|
| NOₓ (mg/m³) | 2.730 | 815 | 380 | 160 |
| HF (mg/m³) | 20 | 4 | <1 | <0,1 |

Gemäß diesem Beispiel erfolgt die Auskreisung der beladenen Waschlösung (Mischsäure) in der ersten Kolonne K1 wenn eine Säurekonzentration von 25 Gew.-% erreicht ist. In den nachfolgenden Kolonnen K2 und K3 beträgt diese jeweils 5 bzw. 0,1 Gew.-%. Das Konzentrationsverhältnis von Misch- oder Dünnsäure in der Reihenfolge K1 bis K3 (K1:K2:K3) beträgt somit 248:53:1.

Die Reinigung des Abgasstromes erfolgte unter Einhaltung eines Verhältnisses der Raumbelastung der ersten Waschkolonne (K1) zu denen der nachfolgenden Waschkolonnen (K2, K3) als Summe von 1:3.

Entsteht in der Waschkolonne K2 eine beladene Waschlösung mit einem zu hohen Anteil an Säure, sodass dieser nicht mit dem HF/HNO₃-Verhältnis der Beizmischung übereinstimmt, so wird eine Teilmenge dieser Waschlösung separat ausgekreist und entsorgt oder ggf. gemäß Beispiel 2 weiter behandelt.

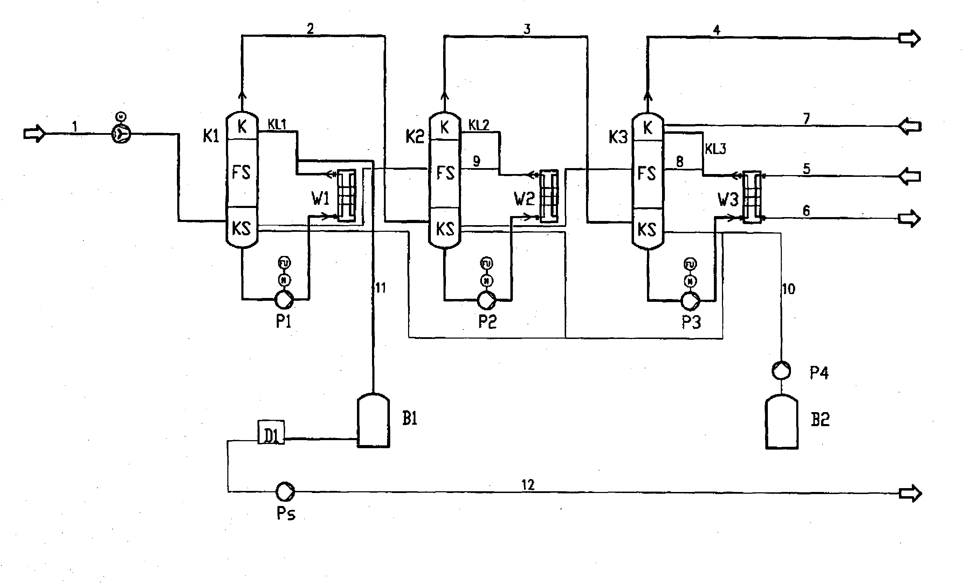

## Patentansprüche

1. Verfahren zur Reinigung und Aufarbeitung von nitrosen Abgasen, die mindestens noch eine zusätzliche saure Komponente enthalten, wobei das Abgas stufenweise, in mindestens drei Waschstufen mit in Reihe geschalteten Waschkolonnen (K1, K2, K3) mit einer Füllkörperschüttung (FS) mit einer Oberfläche von 180 bis 980 m²/m³, einer Raumbelastung von 30 bis 180 m³/m³h je Waschkolonne im Gegenstrom mit Wasser als Waschlösung mit einer Temperatur von 5 bis 30°C in Kontakt gebracht wird, unter Zusatz eines Oxidationsmittels, um im Abgas enthaltene saure Komponenten und im Kolonnensumpf (KS) HNO₂ zu HNO₃ aufzuoxidieren, wobei in der ersten Waschstufe (K1) mindestens 60% der im Abgas enthaltenen NOx-Bestandteile und 90% der im Abgas enthaltenen weiteren sauren Bestandteile ausgewaschen werden, die Säurekonzentrationen der beladenen Waschlösungen ermittelt und überwacht werden und der Waschkreislauf so lange gefahren wird, bis sich in den Kolonnensümpfen (KS) der Waschkolonnen (K1, K2, K3) ein Konzentrationsverhältnis der Misch- oder Dünnsäure in der Reihenfolge K1:K2:K3 von 500:50:5 bis 500:10:0,2 einstellt, und unmittelbar danach Mischsäure aus der ersten Kolonne (K1) ausgekreist und anschließend nacheinander jeweils Dünnsäure aus der zweiten Kolonne (K2) in die erste Kolonne (K1) und aus der dritten Kolonne (K3) in die zweite Kolonne (K2) nachdosiert werden und der dritten Kolonne (K3) als Ausgleich Wasser zugeführt wird, und die Raumbelastung der einzelnen Waschkolonnen (K1, K2, K3) untereinander so eingestellt wird, dass das Verhältnis der Raumbelastung der ersten Waschkolonne (K1) zu denen der nachfolgenden Waschkolonnen (K2, K3) als Summe von 1:1,5 bis 1:10 beträgt.

2. Verfahren nach Anspruch 1, **dadurch gekennzeichnet, dass** zur Ermittlung der Konzentration der Misch- oder Dünnsäure jeweils am Sumpf (KS) der Waschkolonnen (K1, K2, K3) Proben der beladenen Waschlösung gezogen und entweder deren Dichte oder Leitfähigkeit als Äquivalenzwert bestimmt werden, und in Abhängigkeit von den ermittelten Ist-Werten und deren Vergleich mit vorgegebenen Sollwerten der Zeitpunkt der Auskreisung von Mischsäure, Dünnsäure sowie der Nachdosierung von Wasser ermittelt werden..

3. Verfahren nach einem der Ansprüche 1 oder 2, **dadurch gekennzeichnet, dass** nach erfolgter Auskreisung von Mischsäure aus der ersten Waschstufe (K1) 30 bis 80% der ausgekreisten Menge durch Dünnsäure und/oder Wasser ersetzt werden.

4. Verfahren nach einem der Ansprüche 1 bis 3, **dadurch gekennzeichnet, dass** frühestens Mischsäure aus der ersten Waschkolonne (K1) ausgekreist wird, wenn sich im Kolonnensumpf (KS) der ersten Waschkolonne (K1) eine Konzentration an Mischsäure, bestehend aus Salpetersäure und der zusätzlichen sauren Komponente, von mindestens 20% eingestellt hat, und spätestens bei Erreichen einer Mischsäurekonzentration von über 40% Mischsäure ausgekreist wird.

5. Verfahren nach einem der Ansprüche 1 bis 4, **dadurch gekennzeichnet, dass** aus der zweiten und/oder dritten Waschkolonne (K2, K3) Dünnsäure ausgekreist wird, wenn der Füllstand im Kolonnensumpf (KS) den oberen Grenzwert erreicht hat.

6. Verfahren nach einem der Ansprüche 1 bis 5, **dadurch gekennzeichnet, dass** aus der zweiten und/oder dritten Waschkolonne (K2, K3) Dünnsäure ausgekreist wird, wenn die Dünnsäure eine ausreichende Konzentration für eine weitere Verwendung erreicht hat.

7. Verfahren nach einem der Ansprüche 1 bis 6, **dadurch gekennzeichnet, dass** die zugesetzte Menge an Oxidationsmittel dem 0,01 bis 0,5-fachen, vorzugsweise 0,05 bis 0,2-fachen, des stöchiometrischen Bedarfs zur NO-Oxidation entspricht, wobei die Dosierung auf die einzelnen Kolonnen in einem Verhältnis der Kolonnen K1:K2:K3 wie 1:2:2 bis 1:4:3 vorgenommen wird.

8. Verfahren nach einem der Ansprüche 1 bis 7, **dadurch gekennzeichnet, dass** der zweiten und/oder dritten Waschkolonne (K2, K3) ein Oxidationsmittel im Mengenverhältnis von mindestens 2:1, bezogen auf die der ersten Waschkolonne (K1) zugeführten Menge an Oxidationsmittel, zugeführt wird.

9. Verfahren nach einem der Ansprüche 1 bis 8, **dadurch gekennzeichnet, dass** der Füllstand in den Sümpfen (KS) der Waschkolonnen (K1, K2, K3) überwacht wird und bei Absinken der Füllstände unterhalb eines Grenzwertes von 30% des maximalen Füllvolumens Dünnsäure und/oder Wasser nachdosiert werden.

10. Verfahren nach einem der Ansprüche 1 bis 9, **dadurch gekennzeichnet, dass** Füllkörper mit einem Lückengrad von mindestens 0,78 bis unter 0,9, vorzugsweise 0,83 bis 0,88, eingesetzt werden.

11. Verfahren nach einem der Ansprüche 1 bis 10, **dadurch gekennzeichnet, dass** bei im Abgasstrom enthaltener Flusssäure Mischsäure erst ausgekreist wird, wenn sich in dieser ein Konzentrationsverhältnis von Salpetersäure zu Flusssäure von 5 bis 50:1 eingestellt hat.

12. Verfahren nach einem der Ansprüche 1 bis 11, **dadurch gekennzeichnet, dass** die aus der ersten Waschkolonne (K1) ausgekreiste Mischsäure zwischengelagert und gegebenenfalls zu einer wiedereinsetzbaren Ätz- oder Beizmischung destillativ aufkonzentriert wird.

13. Verfahren nach einem der Ansprüche 1 bis 12, **dadurch gekennzeichnet, dass** während der destillativen Aufbereitung anfallende Brüden in einem Wärmetauscher kondensiert werden und anfallendes Kondensat als Wasserzusatz der dritten Waschkolonne (K3) zugeführt wird, und nicht kondensierbare Anteile in den zu reinigenden Abgasstrom zurückgeführt werden.

14. Verfahren nach einem der Ansprüche 1 bis 13, **dadurch gekennzeichnet, dass** die nitrosen Abgase aus Beiz- oder Ätzprozessen stammen.

15. Verfahren nach einem der Ansprüche 1 bis 14, **dadurch gekennzeichnet, dass** das Verhältnis der Raumbelastung der ersten Waschkolonne (K1) zu denen der nachfolgenden Waschkolonnen (K2, K3) als Summe 1:2 bis 1:5 beträgt.

## Claims

1. A method for cleaning and reprocessing exhaust gases which contain nitrogen oxides and at least one additional acidic compound, wherein the exhaust gas is brought incrementally into contact, in counterflow, with water as a scrubbing solution having a temperature of 5 to 30°C in at least three scrubbing stages by means of scrubber columns (K1, K2, K3) connected in series and having a packed bed (FS) with a surface area of 180 to 980 m²/m³ and a loading rate per unit volume of 30 to 180 m³/m³h per scrubber column, with the addition of an oxidising agent to oxidise acidic components contained in the exhaust gas and to oxidise HNO₂ to HNO₃ in the column base (KS), wherein at least 60% of the NOₓ components contained in the exhaust gas and 90% of the additional acidic components contained in the exhaust gas are scrubbed out in the first scrubbing stage (K1), the acid concentrations of the laden scrubbing solutions are determined and monitored and the scrubbing cycle is run until a concentration ratio of the mixed or dilute acid in the sequence K1:K2:K3 of 500:50:5 to 500:10:0.2 has been reached in the column bases (KS) of the scrubber columns (K1, K2, K3) and immediately afterwards mixed acid is removed from the circuit from the first column (K1), dilute acid is then re-dosed successively from the second column (K2) to the first column (K1) and from the third column (K3) to the second column (K2), water is fed to the third column (K3) as compensation, and the loading rate per unit volume of the individual scrubber columns (K1, K2, K3) is set between the columns in such a way that the ratio of the loading rate per unit volume of the first scrubber column (K1) to the loading rates per unit volume of the subsequent scrubber columns (K2, K3) as a sum is 1:1.5 to 1:10.

2. Method according to claim 1, **characterised in that** in order to determine the concentration of the mixed or dilute acid at each of the bases (KS) of the scrubber columns (K1, K2, K3), samples of the laden scrubbing solution are taken and either its density or conductivity is determined as an equivalent value, and both the time at which mixed acid and dilute acid are removed from the circuit and the time at which water is subsequently re-dosed are determined according to the actual values determined and their comparison with the specified desired values.

3. Method according to one of the claims 1 or 2, **characterised in that** 30 to 80% of the amount of mixed acid removed from the circuit of the first scrubbing stage (K1) is replaced by dilute acid and/or water.

4. Method according to one of the claims 1 to 3, **characterised in that** mixed acid is removed from the circuit from the first scrubber column (K1) at the earliest when a concentration of mixed acid of at least 20% comprising nitric acid and the additional acid component has been reached in the base (KS) of the first scrubber column (K1), and is removed from the circuit at the latest when a mixed acid concentration of over 40% mixed acid has been reached.

5. Method according to one of the claims 1 to 4, **characterised in that** dilute acid is removed from the circuit from the second and/or third scrubber column (K2, K3), when the filling level in the column base (KS) has reached the upper limit value.

6. Method according to one of the claims 1 to 5, **characterised in that** dilute acid is removed from the circuit from the second and/or third scrubber column (K2, K3) when the dilute acid has reached a sufficient concentration for further utilisation.

7. Method according to one of the claims 1 to 6, **characterised in that** the amount of oxidising agent added corresponds to 0.01 to 0.5 times, preferably 0.05 to 0.2 times the stoichiometric requirement for NO oxidation, wherein the oxidising agent is dosed to the individual columns K1, K2 and K3 at 1 times, 2 to 4 times and 2 to 3 times the stoichiometric requirement respectively.

8. Method according to one of the claims 1 to 7, **characterised in that** an oxidising agent is fed to the second and/or third scrubber column (K2, K3) in the proportion of at least 2:1 based on the amount of oxidising agent fed to the first scrubber column (K1),

9. Method according to one of the claims 1 to 8, **characterised in that** the filling level in the bases (KS) of the scrubber columns (K1, K2, K3) is monitored, and dilute acid and/or water are re-dosed if the filling levels fall below a limit value of 30% of the maximum filling volume.

10. Method according to one of the claims 1 to 9, **characterised in that** packing material with a porosity of at least 0.78 to below 0.9, preferably 0.83 to 0.88, is used.

11. Method according to one of the claims 1 to 10, **characterised in that** mixed acid is not removed from the exhaust gas stream until a concentration ratio of nitric acid to hydrofluoric acid of 5 to 50:1 has been reached in the mixed acid.

12. Method according to one of the claims 1 to 11, **characterised in that** the mixed acid removed from the circuit from the first scrubber column (K1) is stored temporarily and, if necessary, concentrated by distillation to produce a reusable etching or pickling mixture.

13. Method according to one of the claims 1 to 12, **characterised in that** vapours arising during distillation are condensed in a heat exchanger and condensate that has arisen is fed as additional water to the third scrubber column (K3), and non-condensable components are recirculated into the exhaust gas stream which is to be cleaned.

14. Method according to one of the claims 1 to 13, **characterised in that** the gases containing nitrogen oxides originate from pickling or etching processes.

15. Method according to one of the claims 1 to 14, **characterised in that** the ratio of the loading rate per unit volume of the first scrubber column (K1) to the loading rates per unit volume of the subsequent scrubber columns (K2, K3) as a sum is 1:2 to 1:5.

## Revendications

1. Procédé pour la purification et le traitement d'oxydes d'azote rejetés, comprenant en plus au moins un composant acide supplémentaire, le gaz rejeté étant mis au contact, au cours d'au moins trois étapes de lavage, de colonnes de lavage (K1, K2, K3) montées en série et garnies de corps de remplissage (FS) d'une surface comprise entre 180 et 980 m²/m³, d'un volume compris entre 30 et 180 m³/m³h par colonne à contrecourant avec de l'eau en tant que solution de lavage à une température comprise entre 5 et 30°C, en ajoutant un agent oxydant afin de faire oxyder en HNO₃ les composants acides contenus dans le gaz rejeté et le HNO₂ contenu en partie basse de la colonne (KS), au moins 60 % des composants NOₓ contenus dans le gaz rejeté et 90 % des autres composants acides contenus dans le gaz rejeté étant lavés au cours de la première étape de lavage (K1), les concentrations en acide des solutions de lavage chargées étant calculées et surveillées et le circuit de lavage étant en fonctionnement jusqu'à ce que, en partie basse (KS) des colonnes de lavage (K1, K2, K3), le rapport de concentration de l'acide mixte ou de l'acide dilué se règle de manière à être compris entre 500:50:5 et 500:10:0,2 dans l'ordre K1:K2:K3, et directement après cela, l'acide mixte étant exclu de la première colonne (K1) et, pour finir, de manière successive, une dose d'acide dilué issue de la deuxième colonne (K2) étant rajoutée à la première colonne (K1) et une dose d'acide dilué issue de la troisième colonne (K3) étant rajoutée à la deuxième colonne (K2) et de l'eau étant amenée dans la troisième colonne (K3) pour produire une compensation, et le volume de chacune des colonnes de lavage (K1, K2, K3) étant réglé les uns par rapport aux autres de manière à ce que le rapport du volume de la première colonne de lavage (K1) par rapport à ceux des colonnes de lavage suivantes (K2, K3) soit égal à la somme comprise entre 1:1,5 et 1:10.

2. Procédé selon la revendication 1, **caractérisé en ce que**, pour calculer la concentration d'acide mixte ou d'acide dilué, des échantillons de la solution de lavage chargée sont prélevés en partie basse (KS) de chaque colonne de lavage (K1, K2, K3) et soit lors densité soit leur conductivité est déterminée sous forme de valeur équivalente, et le moment d'exclusion de l'acide mixte, l'acide dilué ainsi que du rajout d'une quantité d'eau est calculé en fonction des valeurs effectives calculées et de leur comparaison aux valeurs de consigne prédonnées.

3. Procédé selon l'une quelconque des revendications 1 ou 2, **caractérisé en ce que** 30 à 80 % de la quantité exclue est remplacée par de l'acide diluée et/ou de l'eau après avoir de nouveau exclu l'acide mixte de la première étape (K1),

4. Procédé selon l'une quelconque des revendications 1 à 3, **caractérisé en ce que** l'acide mixte est exclu de la première colonne de lavage (K1) entre le moment où la concentration d'acide mixte, composée d'acide nitrique et des composants acides supplémentaires, a atteint en partie basse (KS) de la première colonne de lavage (K1) au moins 20 % et le moment où la concentration en acide mixte est supérieure à 40 %.

5. Procédé selon l'une quelconque des revendications 1 à 4, **caractérisé en ce que** l'acide dilué est exclu de la deuxième et/ou troisième colonne de lavage (K2, K3) lorsque le niveau de remplissage de la partie basse de la colonne (KS) a atteint la valeur limite supérieure.

6. Procédé selon l'une quelconque des revendications 1 à 5, **caractérisé en ce que** l'acide dilué est exclu de la deuxième et/ou troisième colonne de lavage (K2, K3) lorsque l'acide dilué a atteint une concentration suffisante pour lui permettre d'être réutilisé.

7. Procédé selon l'une quelconque des revendications 1 à 6, **caractérisé en ce que** la quantité d'oxydant rajoutée correspond de 0,01 à 0,5 fois, de préférence de 0,05 à 0,2 fois, le rapport stoechiométrique nécessaire à l'oxydation NO, le dosage dans chacune des colonnes étant effectué dans un rapport de colonnes K1:K2:K3 allant de 1:2:2 à 1:4:3.

8. Procédé selon l'une quelconque des revendications 1 à 7, **caractérisé en ce qu'**un agent oxydant est amené dans la deuxième et/ou troisième colonne (K2, K3) dans des quantités d'au moins 2:1 par rapport à la quantité d'agent oxydant amenée dans la première colonne de lavage (K1),

9. Procédé selon l'une quelconque des revendications 1 à 8, **caractérisé en ce que** le niveau de remplissage des parties basses (KS) des colonnes de lavage (K1, K2, K3) est surveillé et des doses d'acide dilué et/ou d'eau sont rajoutées en cas d'abaissement des niveaux de remplissage en dessous d'une valeur limite de 30 % du volume de remplissage maximal.

10. Procédé selon l'une quelconque des revendications 1 à 9, **caractérisé en ce qu'**on utilise des corps de remplissage d'une porosité comprise entre 0,78 et 0,9, de préférence 0,83 et 0,88.

11. Procédé selon l'une quelconque des revendications 1 à 10, **caractérisé en ce qu'**en cas d'acide fluorhydrique contenu dans le courant de gaz rejeté, l'acide mixte est exclu seulement lorsque son rapport de concentration d'acide nitrique par rapport à l'acide fluorhydrique est compris entre 5 et 50:1.

12. Procédé selon l'une quelconque des revendications 1 à 11, **caractérisé en ce que** l'acide mixte exclu de la première colonne de lavage (K1) est stocké temporairement et porté éventuellement par distillation à une concentration produisant un mélange corrosif ou décapant pouvant être réutilisé.

13. Procédé selon l'une quelconque des revendications 1 à 12, **caractérisé en ce que** les vapeurs produites pendant le traitement par distillation sont condensées dans un échangeur de chaleur et le condensat produit est amené dans la troisième colonne de lavage (K3) sous forme d'ajout d'eau, et les parts non condensables sont amenées dans le courant de gaz rejeté à purifier.

14. Procédé selon l'une quelconque des revendications 1 à 13, **caractérisé en ce que** les oxydes d'azote rejetés proviennent d'opérations de décapage ou de corrosion.

15. Procédé selon l'une quelconque des revendications 1 à 14, **caractérisé en ce que** le rapport du volume de la première colonne de lavage (K1) par rapport à ceux des colonnes de lavage suivantes (K2, K3) est égal à la somme comprise entre 1:2 et 1:5.
